(19) Europäisches Patentamt
European Patent Office
Office européen des brevets

(11) **EP 2 450 772 A2**

(12) **EUROPEAN PATENT APPLICATION**

(43) Date of publication:
**09.05.2012 Bulletin 2012/19**

(51) Int Cl.:
***G06F 3/00*** (2006.01)  ***G06F 3/01*** (2006.01)

(21) Application number: **11184602.8**

(22) Date of filing: **11.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.11.2010 KR 20100108557**

(71) Applicant: **Samsung Electronics Co., Ltd.
Gyeonggi-do (KR)**

(72) Inventors:
• **Jeong, Ki-jun
Seoul (KR)**
• **Ryu, Hee-seob
Gyeonggi-do (KR)**
• **Park, Seung-kwon
Gyeonggi-do (KR)**
• **Seo, Young-kwang
Seoul (KR)**
• **Teshome, Mikiyas
Gyeonggi-do (KR)**

(74) Representative: **Bruce, Alexander Richard Henry
Venner Shipley LLP
200 Aldersgate
London EC1A 4HD (GB)**

(54) **Method and apparatus for generating motion information**

(57) Provided are a method and an apparatus for generating motion information relating to motion of an object to provide reaction of a user interface to the motion of the object. The method for generating the motion information includes: detecting depth information of the object using an image frame acquired by capturing the object through a sensor; generating the motion information by compensating a determined size of the motion of the object in the acquired image frame based on the detected depth information; and generating an event corresponding to the generated motion information.

FIG. 2

EP 2 450 772 A2

**Description**

The present invention relates to motion information generation and, more specifically, to generating more reliable motion information to provide reaction of a user interface to motion of an object.

A user interface can provide temporary or continuous access to allow communication between a user and an object, a system, a device, or a program. The user interface can include a physical medium or a virtual medium. In general, the user interface can be divided into an input of the user for manipulating the system and an output for representing a reaction (i.e., response) or a result of the system input.

The input uses an input device for obtaining a user's manipulation to move a cursor or select a particular subject in a screen. The output uses an output device for allowing a user to perceive the reaction to the input using the user's sight, hearing, or touch.

Recently, a technique for remotely recognizing a user's motion as the input and providing the reaction of the user interface corresponding to the user's motion is under way to provide convenience to the user in a device such as a television or a game console.

Exemplary embodiments overcome the above disadvantages and other disadvantages not described above. Also, an exemplary embodiment is not required to overcome the disadvantages described above, and an exemplary embodiment may not overcome any of the problems described above.

One or more exemplary embodiments provide a method and an apparatus for generating motion information to provide a user with consistency of user experience by compensating motion of an object calculated using an image frame based on a location of the object and controlling to generate the same event for the same motion of the object regardless of the location of the object.

One or more exemplary embodiments also provide a method and an apparatus for generating motion information to provide more accurate reaction of a user interface to motion of an object by compensating a size of the motion so as to generate the same event in response to the motion of the object at locations when the object at the locations with different depth information has the same motion size in a field of view of a sensor.

One or more exemplary embodiments also provide a method and an apparatus for generating motion information to provide more accurate reaction of a user interface by compensating motion of an object in an image frame so as to generate the same event in response to the motion of the object for at least two locations having the same depth information, of which at least one of a horizontal distance and a vertical distance from a center of the image frame is different.

According to an aspect of an exemplary embodiment, there is provided a method for generating motion information relating to a motion of an object to provide reaction of a user interface to the motion of the object, the method including: detecting depth information of the object using an image frame acquired by capturing the object through a sensor; generating the motion information by compensating a determined size of the motion of the object in the acquired image frame based on the detected depth information; and generating an event corresponding to the generated motion information.

The generating the motion information may include when the object has a same actual motion size at different locations having different depth information in a field of view of the sensor, compensating the size of the motion based on the depth information so as to be equal at the different locations.

The generating the motion information may include obtaining a compensated size of the motion by compensating the determined size of the motion of the object in the acquired image frame with a depth proportional to a value indicated by the depth information.

The obtaining the compensated size may include obtaining compensated size of the motion according to:

$$\Delta x_r = \Delta x_0 \cdot C_H \left( 2 \cdot d \cdot \tan \theta_H \right)$$

$$\Delta y_r = \Delta y_0 \cdot C_V \left( 2 \cdot d \cdot \tan \theta_V \right)$$

where $\Delta x_r$ denotes a horizontal size for the compensated motion, $\Delta y_r$ denotes a vertical size for the compensated motion, $\Delta x_0$ denotes a horizontal size for the motion of the object in the image frame, $\Delta y_0$ denotes a vertical size for the motion of the object in the image frame, d denotes the value indicated by the depth information, $\theta_H$ is 1/2 of a horizontal field of view of the sensor, $\theta_V$ is 1/2 of a vertical field of view of the sensor, and $C_H$ and $C_V$ each denote a constant.

The generated event may include, as the reaction of the user interface, at least one of display power-on, display power-off, display of menu, movement of a cursor, change of an activated item, selection of an item, operation corresponding to the item, the display channel change, and sound modification.

According to an aspect of another exemplary embodiment, there is provided an apparatus for generating motion information relating to a motion of an object to provide reaction of a user interface to the motion of the object, the apparatus including: a sensor which acquires an image frame by capturing the object; and a controller which detects depth information of the object, generates the motion information by compensating a determined size of the motion of the object in the acquired image frame based on the detected depth information, and generates an event corresponding to the generated motion information.

The controller may include a generator which, when the object has the same motion size at locations having different depth information in a field of view of the sensor, generates the motion information by compensating the size of the motion using the depth information to generate the same event in response to the motion of the object at the different locations.

The controller may include a generator which obtains the compensated size of the motion by compensating the size of the motion of the object in the acquired image frame with a value proportional to a value indicated by the detected depth information.

The generator may obtain the compensated size of the motion according to:

$$\Delta x_r = \Delta x_0 \cdot C_H \left( 2 \cdot d \cdot \tan \theta_H \right)$$

$$\Delta y_r = \Delta y_0 \cdot C_V \left( 2 \cdot d \cdot \tan \theta_V \right)$$

where $\Delta x_r$ denotes a horizontal size for the compensated motion, $\Delta y_r$ denotes a vertical size for the compensated motion, $\Delta x_0$ denotes a horizontal size for the motion of the object in the image frame, $\Delta y_0$ denotes a vertical size for the motion of the object in the image frame, $d$ denotes the value indicated by the depth information, $\theta_H$ is 1/2 of a horizontal field of view of the sensor, $\theta_V$ is 1/2 of a vertical field of view of the sensor, and $C_H$ and $C_V$ each denote a constant.

The generated event may include, as the reaction of the user interface, at least one of display power-on, display power-off, display of menu, movement of a cursor, change of an activated item, selection of an item, operation corresponding to the item, the display channel change, and sound modification.

According to an aspect of another exemplary embodiment, there is provided a method for generating motion information relating to a motion of an object to provide reaction of a user interface to the motion of the object, the method including: calculating a size of the motion of the object using an image frame acquired by capturing the object through a sensor, the image frame divided into a plurality of regions and at least two of the regions having different thresholds; and generating the motion information by comparing a threshold corresponding to a region comprising the motion of the object with the calculated size of the motion.

The thresholds each may include at least one of a threshold Tx for a horizontal direction in the acquired image frame, a threshold Ty for a vertical direction, and a threshold Tz for a direction perpendicular to the image frame.

A value of the Tx and the Ty in a center region of the image frame among the plurality of the regions may be smaller than a value in an edge region of the image frame.

A value of the Tz in the center region of the image frame among the plurality of the regions may be greater than a value in the edge region of the image frame.

When the object has a same actual motion size in the at least two regions within a field of view of the sensor, the thresholds may have preset values corresponding to the at least two regions respectively to generate a same event in response to the motion of the object in the at least two regions.

The generating the motion information may include determining which one of the regions the object belongs to.

The generating the motion information may include: detecting depth information of the object through the sensor; and obtaining a size of a compensated motion by compensating the size of the motion of the object using the detected depth information.

The method may further include generating an event corresponding to the motion information, wherein the generated event includes, as the reaction of the user interface, at least one of display power-on, display power-off, display of menu, movement of a cursor, change of an activated item, selection of an item, operation corresponding to the item, the display channel change, and sound modification.

According to an aspect of another exemplary embodiment, there is provided an apparatus for generating motion information relating to a motion of an object to provide reaction of a user interface to the motion of the object, the apparatus including: a sensor which obtains an image frame by capturing the object, the image frame divided into a plurality of regions and at least two of the regions having different thresholds; and a controller which calculates a size of the motion of the object using the image frame, and generates the motion information by comparing a threshold corresponding to a region including the motion of the object with the calculated size of the motion.

The thresholds each may include at least one of a threshold Tx for a horizontal direction in the image frame, a threshold Ty for a vertical direction, and a threshold Tz for a direction perpendicular to the image frame.

A value of the Tx and the Ty in a center region of the image frame among the plurality of the regions may be smaller than a value in an edge region of the image frame.

A value of the Tz in the center region of the image frame among the plurality of the regions may be greater than a value in the edge region of the image frame.

When the object has a same actual motion size in the at least two regions in a field of view of the sensor, the thresholds may have preset values corresponding to the at least two regions respectively to generate a same event in response to the motion of the object in the at least two regions.

The controller may include a generator which determines which one of the regions the object belongs to.

The controller may include: a detector which detects depth information of the object through the sensor; and a generator which obtains a size of a compensated motion by compensating the size of the motion of the object using the depth information.

The controller may include a generator which generates an event corresponding to the motion information, wherein the generated event includes, as the reaction of the user interface, at least one of display power-on, display power-off, display of menu, movement of a cursor, change of an activated item, selection of an item, operation corresponding to the item, the display channel change, and sound modification.

According to an aspect of another exemplary embodiment, there is provided a method for generating motion information relating to a motion of an object to provide reaction of a user interface to the motion of the object, the method including: detecting depth information of the object; and generating the motion information by compensating the motion of the object using the detected depth information.

According to an aspect of another exemplary embodiment, there is provided an apparatus for generating motion information relating to a motion of an object to provide reaction of a user interface to the motion of the object, the apparatus including: a sensor which obtains depth information of the object; and a controller which generates the motion information by compensating the motion of the object using the detected depth information.

According to an aspect of another exemplary embodiment, there is provided an apparatus for generating motion information relating to a motion of an object to provide reaction of a user interface to the motion of the object, the apparatus including: a sensor which obtains an image frame by capturing the object; and a controller which detects a location of the object using the image frame, and generates motion information corresponding to the motion of the object based on the detected location, wherein when the object has a same actual motion at a first location and a second location having different depths with respect to the sensor, the controller generates the motion information by compensating the motion of the object in the obtained image frame so as to be equal at the first and second locations.

According to an aspect of another exemplary embodiment, there is provided an apparatus for generating motion information relating to a motion of an object to provide reaction of a user interface to the motion of the object, the apparatus including: a sensor which obtains an image frame by capturing the object; and a controller which detects a location of the object in the image frame, and generates motion information corresponding to the motion of the object using the detected location, wherein when the object has a same actual motion in first and second locations, the controller generates the motion information by compensating the motion of the object in the obtained image frame to generate a same event in response to the same actual motion of the object at the first location and the second location, respectively, and wherein the first location and the second location have a same depth with respect to the sensor and are different with respect to at least one of a horizontal distance and a vertical distance from a center of the obtained image frame.

The above and/or other aspects will become more apparent by describing certain exemplary embodiments with reference to the accompanying drawings, in which:

FIG. 1 is a diagram of a motion information generating apparatus according to an exemplary embodiment;
FIG. 2 is a diagram of reactions of a user interface based on motion of an object according to an exemplary embodiment;
FIG. 3 is a diagram of a sensor according to an exemplary embodiment;
FIG. 4 is a diagram of an image frame and an object in the image frame according to an exemplary embodiment;
FIG. 5 is a diagram of a sensor and a captured location according to an exemplary embodiment;
FIG. 6 is a flowchart of a motion information generating method according to an exemplary embodiment;
FIG. 7 is a diagram of motions of an object in an image frame at locations of different depths for the motion of the same object according to an exemplary embodiment;
FIG. 8 is a diagram of size of a compensated motion in an image frame for a motion of an object according to an exemplary embodiment;
FIG. 9 is a flowchart of a motion information generating method according to another exemplary embodiment;
FIG. 10 is a diagram of at least one of location of an object and motion of the object in an image frame according to an exemplary embodiment; and
FIG. 11 is a diagram of an image frame including regions having different thresholds according to an exemplary embodiment.

Exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, an exemplary embodiment can be practiced without those specifically defined matters. Also, well-known functions or constructions are not described in detail since they would obscure the exemplary embodiments with unnecessary detail. Hereinafter, expressions such as "at least one of," when preceding a list of elements, modify the entire list of elements and do not modify the individual elements of the list.

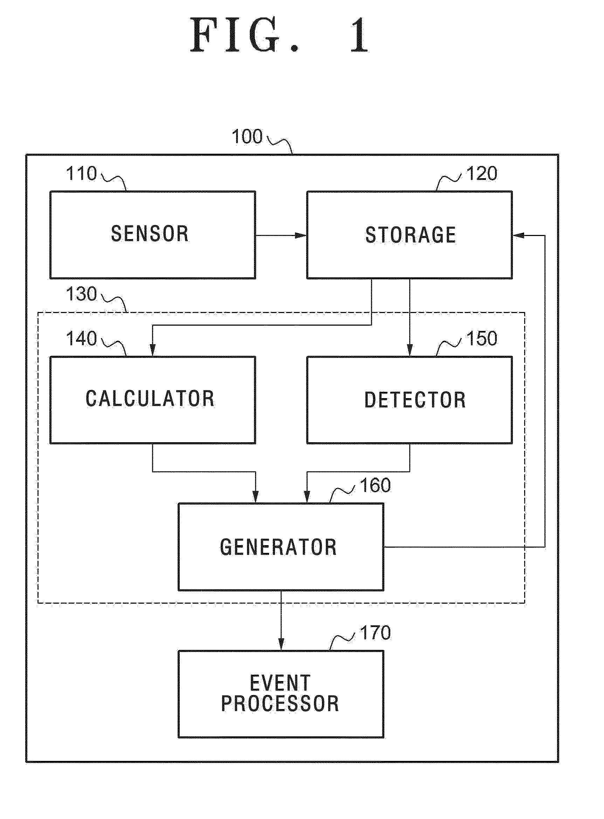

FIG. 1 is a diagram of a motion information generating apparatus 100 according to an exemplary embodiment.

The motion information generating apparatus 100 includes a sensor 110 and a controller 130. The motion information generating apparatus 100 may further include a storage 120 and an event processor 170. The controller 130 includes a calculator 140, a detector 150, and a generator 160.

The motion information generating apparatus 100 generates motion information of an object by acquiring motion of the object as an input, and issues an event corresponding to the motion information of the object as the reaction (i.e., response) of a user interface. The motion information generating apparatus 100 processes the generated event and outputs the reaction of the user interface.

The sensor 110 locates the object. The location of the object may include at least one of coordinates for a vertical direction in an image frame, coordinates for a horizontal direction in the image frame, and depth information of the object indicating a distance between the object and the sensor 110. Herein, the depth information of the object may be represented as the coordinates in the direction perpendicular to the image frame. For example, the sensor 110 can capture the object and obtain the image frame including the depth information of the object. Herein, the image frame is divided to a plurality of regions, and at least two of the regions may have different thresholds. As the location of the object, the sensor 110 may obtain the coordinates for the vertical direction in the image frame and the coordinates for the horizontal direction in the image frame. As the location of the object, the sensor 110 may obtain the depth information of the object indicating the distance between the object and the sensor 110. The sensor 110 may employ at least one of a depth sensor, a two-dimensional (2D) sensor, and a three-dimensional (3D) camera including a stereoscopic camera. Also, the sensor 110 may employ a device which locates the object by sending and receiving ultrasonic waves or radio waves.

The storage 120 stores at least one of the obtained image frame and the location of the object. The storage 120 may store image frames obtained from the sensor 110 continuously or periodically in a certain time interval, by a preset number or during a preset time. The storage 120 may store the different thresholds of at least two of the regions divided in the image frame. At this time, the threshold, which is compared with the size of the motion of the object, may be used to determine the event generation or a preset event generation amount.

The controller 130 calculates the size of the motion of the object using the image frame. The controller 130 may detect the location of the object (or the region including the motion of the object) and generate the motion information corresponding to the motion of the object using the detected location. More specifically, the controller 130 may generate the motion information by compensating the motion of the object in the image frame based on the location so as to generate the event corresponding to the motion of the object at each location. The motion may be compensated using at least one of a threshold dynamic selection scheme which dynamically selects the threshold based on the location and a motion size compensation scheme which compensates the calculated motion size.

For example, the controller 130 may detect the depth information from the storage 120 and generate the motion information by compensating the size of the motion of the object in the image frame based on the depth information. The controller 130 may generate the motion information by comparing the threshold corresponding to the region including the motion of the object among the plurality of the regions, with the size of the motion. Also, the controller 130 may generate the event corresponding to the motion information.

The controller 130 includes the calculator 140, the detector 150, and the generator 160.

The calculator 140 detects the motion of the object using at least one image frame stored in the storage 120 or using data relating to the locations of the object. The calculator 140 may calculate the size of the detected motion of the object. For example, the calculator 140 may calculate the size of the motion with a straight line length from the start to the end of the motion of the object, or with a virtual straight line length by drawing a virtual straight line based on average locations of the motion of the object.

The detector 150 detects the location of the object or the region including the motion of the object among the plurality of the regions from the storage 120. The location of the object may include at least one of the coordinates for the vertical direction in the image frame, the coordinates for the horizontal direction in the image frame, and the depth information of the object indicating the distance between the object and the sensor 110. When the motion of the object is obtained from a plurality of image frames, the location of the object may be at least one location of the image frames corresponding to the motion of the object, the center point obtained using at least one location of the image frame locations, or the location calculated by considering a travel time of the motion per interval. For instance, the location of the object may be the location of the object in the first image frame of the motion of the object, the location of the object in the last image frame of the motion of the object, or the center of the two locations. When the image frame is divided into a plurality of regions and at least two of the regions have different thresholds, the detector 150 may detect the region including the motion of the object in the image frame.

The generator 160 generates the motion information by compensating the motion of the object received from the calculator 140 based on the location of the object received from the detector 150, so as to generate the event corresponding to the motion of the object. The generator 160 may generate an interrupt signal corresponding to the motion information. As the reaction or the result of the user interface for the motion of the object, at least one of the motion information and the generated interrupt signal may be stored in the storage 120.

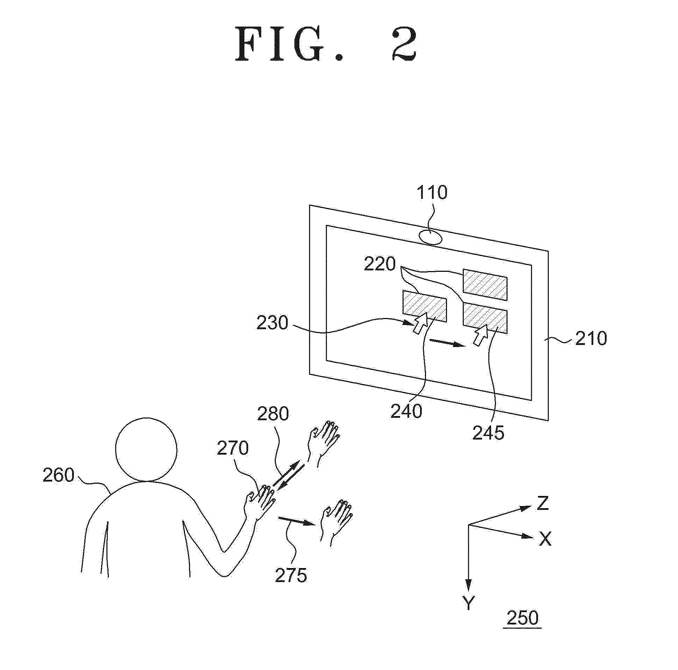

The event processor 170 receives the motion information or the interrupt signal from the generator 160 and processes the event corresponding to the motion information or the interrupt signal. For example, the event processor 170 may display the reaction to the motion of the object through a screen which displays a menu 220, as illustrated in FIG. 2.

The motion information generating apparatus 100 can compensate the motion of the object calculated using the image frame based on the location of the object, and control to generate the same event for the same motion of the object regardless of the location of the object, to thus provide the user with consistency in the user experience.

Now, operations of the above-described components are explained in more detail by referring to FIGS. 2 through 5.

FIG. 2 is a diagram of reactions of a user interface based on motion of an object according to an exemplary embodiment. Referring to FIG. 2, a device 210 includes the motion information generating apparatus 100, or inter-works with the motion information generating apparatus 100. The device 210 can be a media system or an electronic device. The media system can include at least one of a television, a game console, a stereo system, etc. The object can be the body of a user 260, a body part of the user 260, or a tool usable by the user 260.

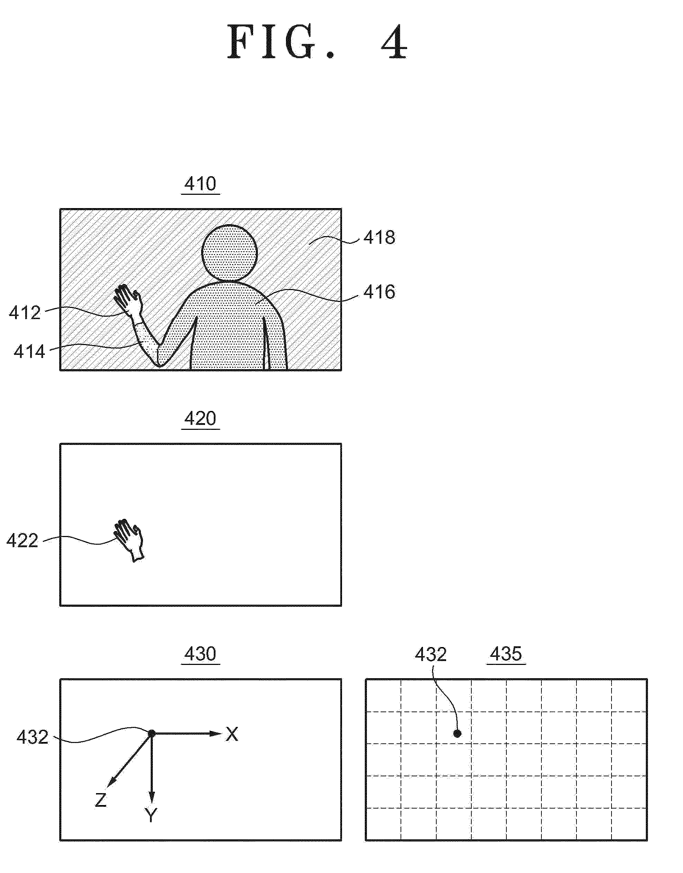

The sensor 110 may obtain an image frame 410 including a hand 270 of the user 260, as shown in FIG. 4. The image frame 410 may include outlines of the objects having the depth of a certain range and depth information corresponding to the outlines, similar to a contour line. The outline 412 corresponds to the hand 270 of the user 260 in the image frame 410 and has the depth information indicating the distance between the hand 270 and the sensor 110. The outline 414 corresponds to part of the arm of the user 260, and the outline 416 corresponds to the head and the upper body of the user 260. The outline 418 corresponds to the background behind the user 260. The outlines 412 through 418 can have different depth information.

The controller 130 detects the object and the location of the object using the image frame 410. The controller 130 may detect the object 412 in the image frame 410 from the image frame 410 and control the image frame 420 to include only the detected object 422.

The controller 130 may control to display the object 412 in a different form than in the image frame 410. For example, the controller 130 may control to represent the object 432 of the image frame 430 with at least one point, line, or side.

The controller 130 may display the object 432 as the point in the image frame 430, and the location of the object 432 as 3D coordinates. The 3D coordinates include at least one of x-axis, y-axis, and z-axis components, where the x axis corresponds to the horizontal direction in the image frame, the y axis corresponds to the vertical direction in the image frame, and z axis corresponds to the direction perpendicular to the image frame, i.e., the value indicated by the depth information.

The controller 130 may track the location of the object using at least two image frames and calculate the size of the motion. The size of the motion of the object may be represented with at least one of the x-axis, y-axis, and z-axis components.

The storage 120 stores the image frame 410 acquired from the sensor 110. In so doing, the storage 120 may store at least two image frames continuously or periodically. The storage 120 may store the object 422 processed by the controller 130 or the image frame 430. Herein, the storage 120 may store the 3D coordinates of the object 432, instead of the image frame 430 including the depth information of the object 432.

When the image frame 435 includes a plurality of virtual grid regions, the coordinates of the object 432 may be represented by the region including the object 432 or the coordinates of the corresponding region. In various implementations, the grid regions may be a minimum unit of the sensor 110 for obtaining the image frame and forming the outline, or the regions divided by the controller 130. The depth information may be divided into preset units in the same manner that the image frame regions are divided into the grids. As the image frame is split to the regions or the depths of the unit size, the data relating to the location of the object and the size of the motion of the object can be reduced.

When some of the regions in the image frame 435 include the object 432, the corresponding image frame 435 may not be used to calculate the location of the object 432 or the motion of the object 432. That is, when the object 432 belongs to some of the regions, the motion of the object 432 in the image frame 435 is compared with the motion of the object actually captured. When the motions are calculated over a certain level, the location of the object 432 in the corresponding partial region may not be used. Herein, the partial region may include the regions corresponding to the corners of the image frame 434. For example, when the regions corresponding to the corners of the image frame include the object, it is possible to preset not to use the corresponding image frame to calculate the location of the object or the motion of the object.

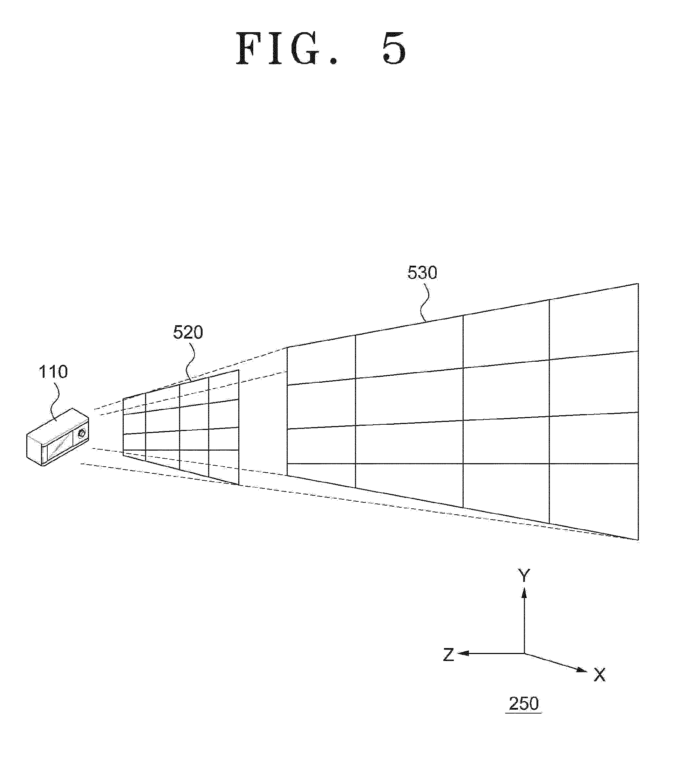

FIG. 5 illustrates sides 520 and 530 captured by the sensor 110 and regions virtually divided in the image frame corresponding to the captured sides 520 and 530 according to the depth. The 3D axis 250 in FIGS. 2 and 5 indicates the hand 270 away from the sensor 110, i.e., the directions for the x axis, y axis, and z axis to mark the location of the object 270.

The storage 120 may store the different thresholds of at least two of the regions divided in the image frame. At this time, the threshold, which is compared with the size of the motion of the object, may be used to determine the event generation or the preset event generation amount. According to the 3D component indicating the size of the motion of the object, the threshold may have at least one of x-axis, y-axis, and z-axis values. Herein, as the reaction of the user interface, the event may include at least one of display power-on, display power-off, display of menu, movement of the cursor, change of an activated item, item selection, operation corresponding to the item, a display channel change, a sound modification, etc.

For instance, as the event responding to the motion of the hand 270 of the user 260 in the direction 275, the activated item of the menu 220 displayed by the device 210 can be changed from the item 240 to the item 245, as illustrated in FIG. 2. The controller 130 may control to display the movement of the cursor 230 according to the motion of the object 270 of the user and to display whether the item is activated by determining whether the cursor 230 is in the region of the item 240 and the item 245.

Regardless of the display of the cursor 230, the controller 130 may discontinuously display the change of the activated item. In so doing, the controller 130 may determine whether to change the activated item to the adjacent item by comparing the size of the motion of the object in the image frame acquired through the sensor 110 with the preset threshold relating to the change of the activated item. For instance, it is assumed that the threshold compared when the activated item is changed by moving the activation by one space is 5 cm. In this case, when the size of the calculated motion is 3 cm, it is compared with the threshold such that the activated item is not changed. At this time, the generated motion information can indicate no movement of the activated item, no interrupt signal generation, or the maintenance of the current state. Also, the motion information may not be generated. When the size of the calculated motion is 12 cm, the generator 160 determines to change the activated item to the adjacent item shifted two spaces away, as the event generation amount. At this time, the generated motion information may indicate a two-space shift of the activated item. The generator 160 may generate the interrupt signal for the two-space shift of the activated item.

As the event corresponding to a motion (e.g., push) of the hand 270 of the user 260 in the direction 280, the selection of the activated item 240 in the displayed menu 220 of the device 210 may be performed. The threshold for the item selection may be a value to compare to the z-axis size of the motion of the object.

The sensor 110 may obtain the coordinates for the vertical direction in the image frame and the coordinates for the horizontal direction in the image frame, as the location of the object. As the location of the object, the sensor 110 may acquire the depth information of the object indicative of the distance between the object and the sensor 110. The sensor 110 may employ at least one of a depth sensor, a 2D camera, and a 3D camera including a stereoscopic camera. The sensor 110 may employ a device which locates the object by sending and receiving ultrasonic waves or radio waves.

For example, when a general optical camera is used as the 2D camera, the controller 130 may detect the object by processing the obtained image frame. The controller 130 may locate the object in the image frame, and detect the size of the object or the size of the user in the image frame. Using a mapping table of the depth information based on the detected size, the controller 130 may acquire the depth information. When the stereoscopic camera is used as the sensor 110, the controller 130 may acquire the depth information of the object using at least one of parallax and focal distance.

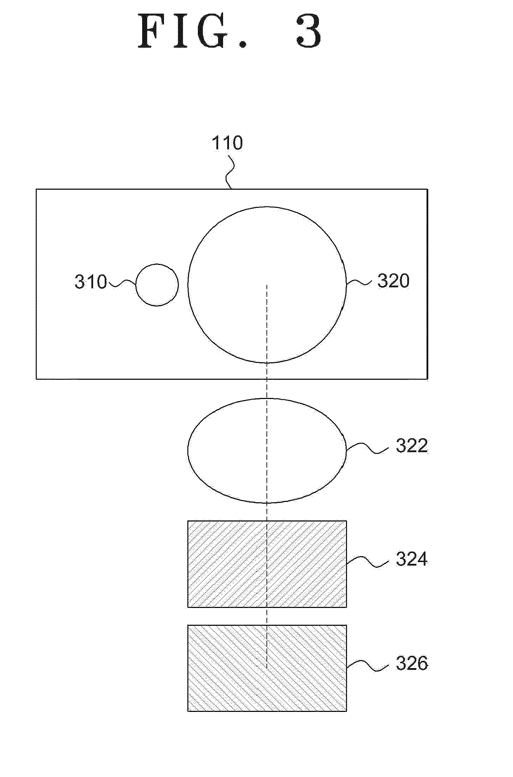

A depth sensor used as the sensor 110 according to an exemplary embodiment will now be further explained with reference to FIG. 3. The sensor 110 according to the present exemplary embodiment is a depth sensor. The sensor 110 includes an infrared transmitter 310 and an optical receiver 320. The optical receiver 320 may include a lens 322, an infrared filter 324, and an image sensor 326. The infrared transmitter 310 and the optical receiver 320 can be located at the same location or adjacent locations. The sensor 110 may have a unique field of view according to the optical receiver 320. The infrared light transmitted through the infrared transmitter 310 can reach and be reflected by substances including a front object. The reflected infrared light is received at the optical receiver 320. The lens 322 may receive optical components of the substances, and the infrared filter 324 may pass the infrared light of the received optical components. The image sensor 326 acquires the image frame by converting the passed infrared light to an electrical signal. For example, the image sensor 326 may be a Charge Coupled Device (CCD) or a Complementary Metal Oxide Semiconductor (CMOS). The image frame acquired by the image sensor 326 may, for example, be the image frame 410 of FIG. 4. The signal may be processed such that the outlines are represented according to the depth of the substances and the outlines include corresponding depth information. The depth information may be acquired using a time of flight that the infrared light sent from the infrared transmitter 310 takes to arrive at the optical receiver 320. The device locating the object by sending and receiving the ultrasonic waves or radio waves may also acquire the depth information using the time of flight of the ultrasonic wave or the radio wave.

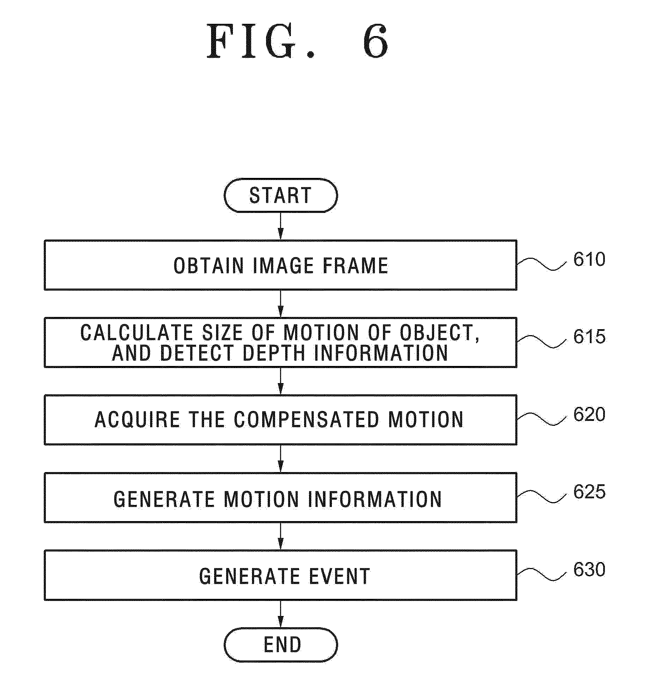

FIG. 6 is a flowchart of a motion information generating method according to an exemplary embodiment.

In operation 610, the sensor 110 obtains the image frame by capturing the object. The sensor 110 may employ at least one of a depth sensor, a 2D camera, or a 3D camera including a stereoscopic camera. The sensor 110 may employ a device which locates the object by sending and receiving ultrasonic waves or radio waves. The sensor 110 may provide the depth information of the object by measuring the distance between the object and the sensor 110.

In operation 615, the controller 130 calculates the size of the motion of the object using the image frame, and detects the depth information of the object. The controller 130 may detect the size of the motion of the object using the data relating to the locations of the object. For instance, the controller 130 may calculate the size of the motion with the straight length from the start to the end of the motion of the object, or generate a virtual straight line for average locations of the motion of the object and calculate the length of the generated virtual straight line as the size of the motion. The controller 130 identifies the object from the image frame obtained from the sensor 110, and detects the depth information of the identified object.

In operation 620, the controller 130 compensates the size of the motion of the object in the image frame based on the depth information and acquires the compensated motion. The controller 130 may compensate the motion of the object in the image frame based on the region including the location of the object or the motion of the object, so as to generate the event corresponding to the motion of the object in the region including the location of the object or the motion of the object. The motion may be compensated using at least one of the threshold dynamic selection scheme which dynamically selects the threshold based on the location and the motion size compensation scheme which compensates the calculated motion size.

In operation 625, the controller 130 generates the motion information using the compensated motion. The controller 130 may generate the motion information by comparing the compensated motion with the threshold, or may generate the interrupt signal corresponding to the motion information. The controller 130 may omit comparing the compensated motion with the threshold, and may generate the interrupt signal to immediately issue the event using the compensated motion. For example, the motion information may be information indicating the movement of the activated item or the item selection.

In operation 630, the event processor 170 processes to execute the event corresponding to the motion information or the interrupt signal. For example, the event processor 170 may represent the reaction to the motion of the object through the screen displaying the menu 220 of FIG. 2.

As such, by compensating the size of the motion of the object, the motion information generating apparatus 100 can provide a more accurate reaction of the user interface based on the motion of the object.

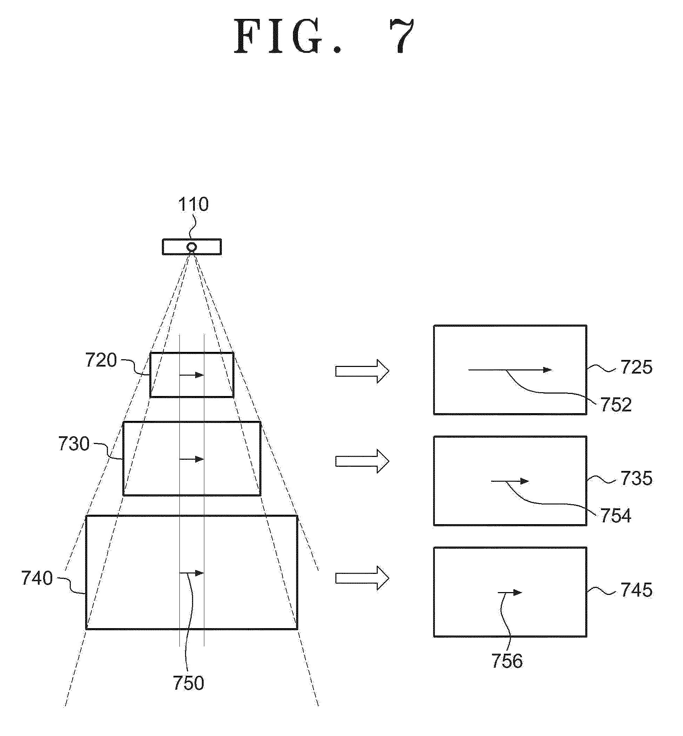

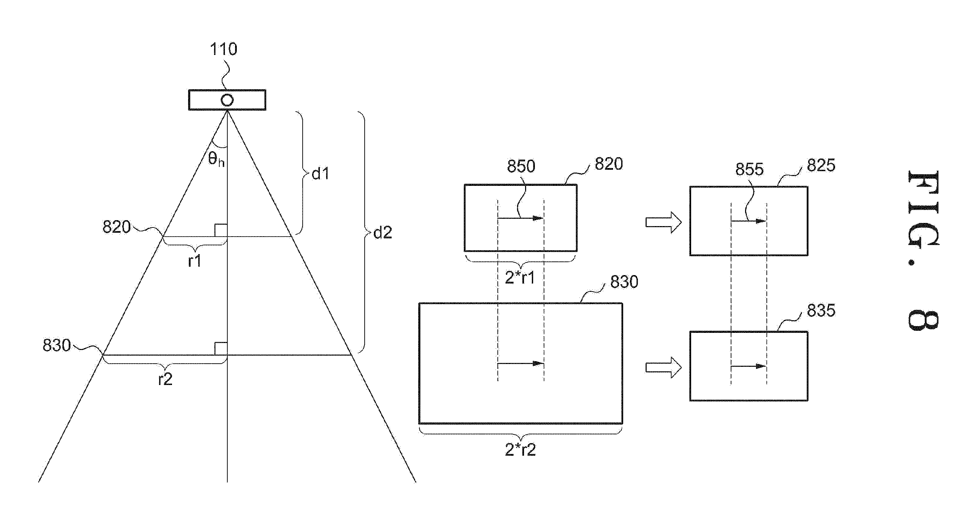

Hereafter, the operation 620 and the operation 625 are described in more detail by referring to FIGS. 7 and 8.

In FIG. 7, motions 750 of the object in sides 720, 730, and 740 of the different depth information captured by the sensor 110 can differ from motions 752, 754 and 756 of the object in image frames 725, 735 and 745. For example, even when the captured sides 720, 730 and 740 have different depth information and the object in the sides 720, 730 and 740 has the same motion 750, the motions 752, 754 and 756 of the object in the image frames 725, 735 and 745 (for example, the motions 752, 754 and 756 of the object are calculated by the calculator 140 of FIG. 1) can have different motion sizes according to the depth information. That is, as the distance between the sensor 110 and the object increases, the size of the motion of the object calculated by the calculator relatively decreases. Herein, according to exemplary embodiments, the same motions 750 can be shifted and be matched with other motions. That is, the same motions 750 can match their motion type and motion direction of the start and the end. In implementations of the user interface, the same motion 750 may further satisfy a condition that a speed of the motion is matched. When the generator 160 illustrated in FIG. 1 does not compensate the size of the motions 752, 754 and 756 of the object, different events can take place as the reaction of the user interface for the motions 752, 754 and 756 of the object.

When the object at the locations of the different depth information in the field of view of the sensor has the motion of the same size, the controller may generate the motion information by compensating the motion using the depth information, for example, by the generator 160 of FIG. 1 in operation 620, so as to generate the same event in response to the motion of the object at the locations. In operation 620, the generator may obtain the size of the compensated motion by compensating the size of the motion of the object in the image frame (for example, the size of the motion of the object is calculated by the calculator 140 of FIG. 1) in proportion to the value indicated by the depth information. For example, the generator may obtain the size of the compensated motion according to the following equation:

$$\Delta x_r = \Delta x_0 \cdot C_H \left( 2 \cdot d \cdot \tan \theta_H \right)$$

$$\Delta y_r = \Delta y_0 \cdot C_V \left( 2 \cdot d \cdot \tan \theta_V \right) \cdot$$

where $\Delta x_r$ denotes the horizontal size for the compensated motion, $\Delta y_r$ denotes the vertical size for the compensated motion, $\Delta x_0$ denotes the horizontal size for the motion of the object in the image frame, $\Delta y_0$ denotes the vertical size for the motion of the object in the image frame, $d$ denotes the value of the depth information, $\theta_H$ is 1/2 of the horizontal field of view of the sensor, $\theta_V$ is 1/2 of the vertical field of view of the sensor, and $C_H$ and $C_V$ denote constants.

FIG. 8 is a diagram of size of a compensated motion in an image frame for a motion of an object according to an exemplary embodiment. A captured side 820 of FIG. 8 is distanced from the sensor 110 by the value indicated by the depth information, i.e., by a distance d1, and a captured side 830 is distanced from the sensor 110 by a distance d2. The width of the captured side 820 is 2*r1, wherein r1 is d1*tan $\theta_H$, and the width of the captured side 830 is 2*r2, wherein r2 is d2*tan $\theta_H$. In operation 620, the generator 160 may obtain the size of the compensated motion 855 by compensating the size of the motion of the object in the image frame calculated by the calculator, in proportion to the value of the depth information (d1 or d2). That is, in operation 620, the generator may obtain the size of the compensated motion 855 by compensating the motion of the object in the image frame so as to generate the same event in response to the motion 850 of the same object at the locations of the different depth information. In operation 625, the generator 160 generates the motion information corresponding to the compensated motion 855. Herein, the motion information may be the event generation corresponding to the motion information, the generation amount of the preset event, or the interrupt signal. For example, the motion information may be information indicating the movement of the activated item or the item selection.

Instead of the motion size compensation scheme based on the above-stated equation, the threshold dynamic selection scheme may be used. For example, in the threshold dynamic selection scheme, the generator 160 may select or determine the threshold as the value inversely proportional to the value of the depth information.

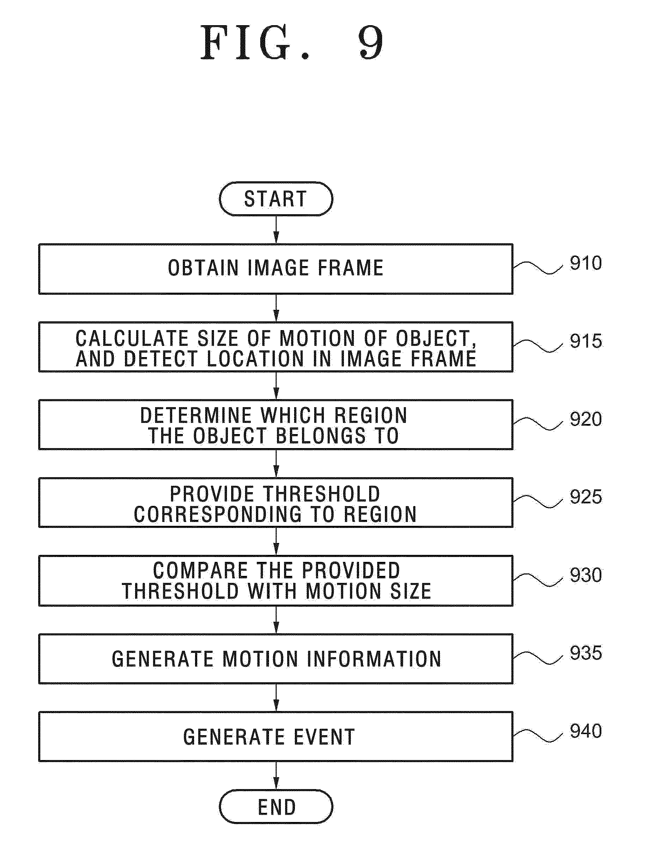

FIG. 9 is a flowchart of a motion information generating method according to another exemplary embodiment.

In operation 910, the sensor 110 obtains the image frame by capturing the object. Herein, the image frame may be divided into a plurality of regions, and at least two of the regions may have different thresholds. The threshold, which is compared with the size of the motion of the object, may be used to determine the event generation or the preset event generation amount. The sensor 110 may provide the coordinates for the vertical direction in the image frame and the coordinates for the horizontal direction in the image frame, as the location of the object.

In operation 915, the controller 130 calculates the size of the motion of the object using the image frame, and detects the location of the object in the image frame. The controller 130 may detect the size of the motion of the object using the data relating to the locations of the object. Also, the controller 130 may identify the object from the image frame obtained from the sensor 110, and detect the coordinates of at least one of the x axis and the y axis in the image frame of the identified object.

In operation 920, the controller 130 determines which one of the regions the object or the motion of the object belongs to. For example, the regions may be the divided in the image frame 435 of FIG. 4. At least two of the regions may have different thresholds. The region including the object or the motion of the object may be at least one of the regions. For example, when a plurality of regions having different thresholds includes the motion of the object, the controller 130 may determine the center of the motion of the object as the location of the motion of the object.

In operation 925, the controller 130 provides the threshold corresponding to the region including the object or the motion of the object. For instance, the threshold may have the values for at least one of the x axis, the y axis, and the z axis for the 3D component indicating the size of the motion of the object. The threshold may be stored in the storage 120, and the stored threshold may be detected by the controller 130 and selected as the threshold corresponding to the region including the object or the motion of the object.

In operation 930, the controller 130 compares the provided threshold with the size of the motion. For example, when the motion of the object is the push, the controller 130 may compare the z-axis size of the motion of the object with the provided threshold to determine whether to select the item as the event for the push.

In operation 935, the controller 130 generates the motion information by comparing the provided threshold with the size of the motion, or generates the interrupt signal to generate the corresponding event. For instance, when the threshold provided to determine whether to select the item is 5 cm in the z-axis direction and the z-axis size of the calculated motion is 6 cm, the controller 130 generates the motion information indicating the information relating to the item selection, as the event for the motion of the object by comparing the threshold and the size of the motion.

Also, in operation 935, the controller 130 may generate the motion information by comparing the compensated motion size and the provided threshold. The controller 130 may detect the depth information of the object through the sensor 110, compensate the size of the motion of the object using the depth information, and thus acquire the size of the compensated motion. A method of compensating the size of the motion of the object using the depth information according to one or more exemplary embodiments has been explained, for example, with reference to FIGS. 6, 7 and 8, and thus shall be omitted herein. The controller 130 may generate the motion information by comparing the compensated motion size and the provided threshold. The controller 130 may generate the interrupt signal to generate the event corresponding to the compensated motion size.

In operation 940, the event processor 170 processes to execute the event corresponding to the motion information or the interrupt signal. For example, the event processor 170 may represent the reaction to the motion of the object through the screen displaying the menu 220 of FIG. 2.

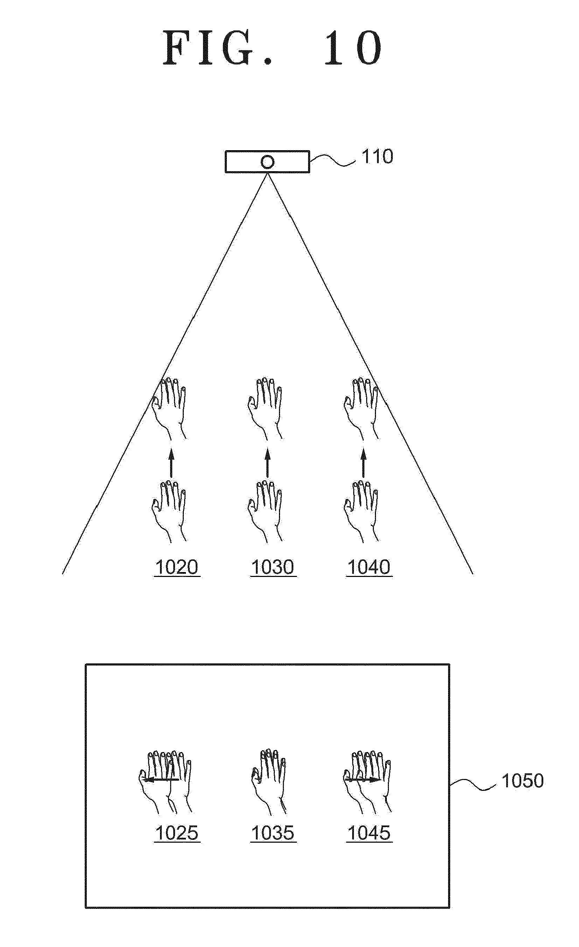

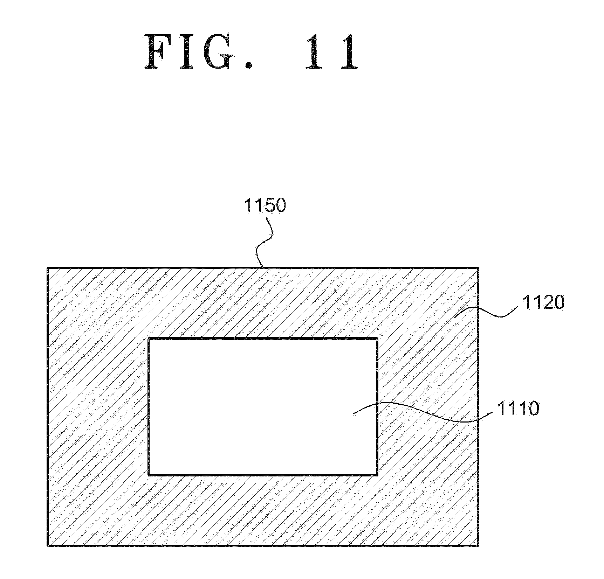

Detailed descriptions of the operations 925, 930 and 935 according to another exemplary embodiment are provided below with reference to FIGS. 10 and 11.

Referring to FIG. 10, when the object has the same motion at locations 1020, 1030 and 1040 with the same depth information in the field of view of the sensor 110, motions 1025, 1035 and 1045 of the object calculated in the image frame may differ from each other according to their location in the image frame 1050. For example, with respect to the same object motion, the x-axis or y-axis size for the motion of the object at the center 1035 of the image frame 1050 may be relatively smaller than the x-axis or y-axis size for the motion of the object at the edge 1025 or 1045 of the image frame 1050. With respect to the same object motion, the y-axis size for the motion of the object at the center 1035 of the image frame 1050 may be relatively greater than the y-axis size for the motion of the object at the edge 1025 or 1045 of the image frame 1050. When the motions 1025, 1035 and 1045 of the object are compensated by, for example, the generator 160 of FIG. 1, different events may be generated as the reaction of the user interface with respect to the motions 1025, 1035 and 1045 of the object.

The controller 130 may generate the motion information by compensating the motion of the object calculated using the image frame 1050 in order to generate the same event in response to the same motion of the object at the different locations in the image frame 1050 respectively. As such, the motion information generating apparatus 100 may provide the more reliable reaction of the user interface by compensating the motion of the object in the image frame.

For example, the controller 130 may compensate the motion of the object using the threshold dynamic selection scheme. An image frame 1150 of FIG. 11 may be divided into a region 1110 and a region 1120, and the region 1110 and the region 1120 may have different thresholds. The thresholds may be stored to the storage 120 as shown in the following table:

|  | Tx, Ty | Tz |
|---|---|---|
| Region 1110 | 1 cm | 5 cm |
| Region 1120 | 2.5 cm | 3.5 cm |

In the table, Tx denotes the threshold for the horizontal direction in the image frame, Ty denotes the threshold for the vertical direction in the image frame, and Tz denotes the threshold for the direction perpendicular to the image frame. The thresholds each may include at least one of Tx, Ty and Tz. When the object has the same motion size in at least two regions within the field of view of the sensor 110, the thresholds may have preset values corresponding to the at least two regions so as to generate the same event in response to the motion of the object in the at least two regions. For instance, as for Tx and Ty of the thresholds for compensating the motion of the object, among the plurality of the regions, the value in the center region 1110 of the image frame 1150 may be smaller than the value in the edge region 1120 of the image frame 1150. As for Tz of the thresholds for compensating the motion of the object, among the plurality of the regions, the value in the center region 1110 of the image frame 1150 may be greater than the value in the edge region 1120 of the image frame 1150.

The controller 130 may compensate the motion of the object using the motion size compensation scheme. For example, the generator 160 of FIG. 1 may obtain the size of the compensated motion by compensating the x-axis or y-axis size of the motion calculated by the calculator 140 with the value inversely proportional to the distance of the object away from the center of the image frame in the image frame. The generator 160 may obtain the size of the compensated motion by compensating the z-axis size of the motion calculated by the calculator 140 with the value proportional to the distance of the object away from the center of the image frame in the image frame.

According to one or more exemplary embodiments, the controller 130 of FIG. 1 may detect the location of the object using the image frame and generate the motion information corresponding to the motion of the object based on the detected location. The detected location may include a first location and a second location, which may have different depth information. When the object has the same motion at the first location and the second location, the controller 130 may generate the motion information by compensating the motion of the object in the image frame so as to generate the same event corresponding to the motion.

For example, in FIG. 8, the first location and the second location may be the captured side 820 and the captured side 830. The same motion of the object at the first location and the second location may be the motion 850 of the object in the captured sides 820 and 830. The controller 130 may generate the motion information by compensating the motion of the object in the image frame so as to generate the same event corresponding to the same motion of the object.

In exemplary embodiments, the controller 130 of FIG. 1 detects the location of the object in the image frame and generates the motion information corresponding to the motion of the object in the detected location. The detected location may include a first location and a second location. The first location and the second location may have the same depth information, and at least one of the horizontal distance and the vertical distance from the center of the image frame may be different. At this time, the controller 130 can generate the motion information by compensating the motion of the object in the image frame so as to generate the same event in response to the motion of the object at the first location and the second location, respectively.

For example, the first location and the second location may be the start location of the motion of the object. Referring to FIG. 10, the first location may be the start location of the motion 1035 of the object in the image frame 1050, and the second location may be the start location of the motion 1045 of the object in the image frame 1050. The first location and the second location can have the same depth information, and at least one of the horizontal distance and the vertical distance from the center of the image frame 1050 can be different. In this case, the controller 130 generates the motion information by compensating the motion of the object in the image frame so as to generate the same event in response to the motions 1030 and 1040 of the same object at the first location and the second location, respectively.

Exemplary embodiments as set forth above may be implemented as program instructions executable by various computer means and recorded to a computer-readable medium. The computer-readable medium may include program instructions, data files, and data structures alone or in combination. The program instructions recorded to the medium may be specially designed and constructed in the exemplary embodiments, but can be well known to those skilled in the computer software arts. Moreover, one or more components of the motion information generating apparatus 100 can include a processor or microprocessor executing a computer program stored in a computer-readable medium.

The foregoing exemplary embodiments and advantages are merely exemplary and are not to be construed as limiting the present inventive concept. The present teaching can be readily applied to other types of apparatuses. Also, the description of exemplary embodiments is intended to be illustrative, and not to limit the scope of the claims, and many alternatives, modifications, and variations will be apparent to those skilled in the art.

**Claims**

1. A method for generating motion information relating to a motion of an object to provide reaction of a user interface to the motion of the object, the method comprising:

       detecting depth information of the object using an image frame acquired by capturing the object through a sensor;
       generating the motion information by compensating a determined size of the motion of the object in the acquired image frame based on the detected depth information; and
       generating an event corresponding to the generated motion information.

2. The method of claim 1, wherein the generating the motion information comprises:

       when the object has a same actual motion size at different locations having different depth information in a field of view of the sensor, compensating the determined size of the motion based on the depth information so as to be equal at the different locations.

3. The method of claim 1 or 2, wherein the generating the motion information comprises:

       obtaining the compensated size of the motion by compensating the determined size of the motion of the object in the acquired image frame with a value proportional to a depth indicated by the detected depth information.

4. The method of claim 3, wherein the obtaining the compensated size comprises obtaining the compensated size of the motion according to:

$$\Delta x_r = \Delta x_0 \cdot C_H \left( 2 \cdot d \cdot \tan \theta_H \right)$$

$$\Delta y_r = \Delta y_0 \cdot C_V \left( 2 \cdot d \cdot \tan \theta_V \right)$$

   where $\Delta x_r$ denotes a horizontal size for the compensated size of the motion, $\Delta y_r$ denotes a vertical size for the compensated size of the motion, $\Delta x_0$ denotes a horizontal size for the determined size of the motion of the object in the acquired image frame, $\Delta y_0$ denotes a vertical size for the determined size of the motion of the object in the acquired image frame, $d$ denotes the depth indicated by the depth information, $\theta_H$ is 1/2 of a horizontal field of view of the sensor, $\theta_V$ is 1/2 of a vertical field of view of the sensor, and $C_H$ and $C_V$ each denote a constant.

5. The method of any one of claims 1 to 4, wherein the generated event comprises, as the reaction of the user interface, at least one of display power-on, display power-off, display of menu, movement of a cursor, change of an activated item, selection of an item, an operation corresponding to an item, a display channel change, and sound modification.

6. An apparatus for generating motion information relating to a motion of an object to provide reaction of a user interface to the motion of the object, the apparatus comprising:

a sensor which acquires an image frame by capturing the object; and

a controller which detects depth information of the object, generates the motion information by compensating a determined size of the motion of the object in the acquired image frame based on the detected depth information, and generates an event corresponding to the generated motion information.

7. The apparatus of claim 6, wherein the controller comprises:

a generator which, when the object has a same actual motion size at different locations having different depth information in a field of view of the sensor, generates the motion information by compensating the determined size of the motion using the depth information so as to be equal at the different locations.

8. The apparatus of claim 6 or 7, wherein the controller comprises:

a generator which obtains the compensated size of the motion by compensating the determined size of the motion of the object in the acquired image frame with a value proportional to a depth indicated by the detected depth information.

9. The apparatus of claim 8, wherein the generator obtains the compensated size of the motion according to:

$$\Delta x_r = \Delta x_0 \cdot C_H \left( 2 \cdot d \cdot \tan \theta_H \right)$$

$$\Delta y_r = \Delta y_0 \cdot C_V \left( 2 \cdot d \cdot \tan \theta_V \right)$$

where $\Delta x_r$ denotes a horizontal size for the compensated size of the motion, $\Delta y_r$ denotes a vertical size for the compensated size of the motion, $\Delta x_0$ denotes a horizontal size for the determined size of the motion of the object in the image frame, $\Delta y_0$ denotes a vertical size for the determined size of the motion of the object in the acquired image frame, d denotes the depth indicated by the depth information, $\theta_H$ is 1/2 of a horizontal field of view of the sensor, $\theta_V$ is 1/2 of a vertical field of view of the sensor, and $C_H$ and $C_V$ each denote a constant.

10. The apparatus of any one of claims 6 to 9, wherein the generated event comprises, as the reaction of the user interface, at least one of display power-on, display power-off, display of menu, movement of a cursor, change of an activated item, selection of an item, an operation corresponding to an item, a display channel change, and sound modification.

# FIG. 1

100

110 SENSOR → 120 STORAGE

130

140 CALCULATOR

150 DETECTOR

160 GENERATOR

170 EVENT PROCESSOR

# FIG. 2

# FIG. 3

# FIG. 4

410

418

416

412

414

420

422

430

432

X

Z

Y

432    435

# FIG. 5

# FIG. 6

```
                    ┌─────────────┐
                    │    START    │
                    └─────────────┘
                           │
                           ▼
     ┌──────────────────────────────────────────┐
     │         OBTAIN IMAGE FRAME               │── 610
     └──────────────────────────────────────────┘
                           │
                           ▼
     ┌──────────────────────────────────────────┐
     │   CALCULATE SIZE OF MOTION OF OBJECT,    │── 615
     │     AND DETECT DEPTH INFORMATION          │
     └──────────────────────────────────────────┘
                           │
                           ▼
     ┌──────────────────────────────────────────┐
     │      ACQUIRE THE COMPENSATED MOTION      │── 620
     └──────────────────────────────────────────┘
                           │
                           ▼
     ┌──────────────────────────────────────────┐
     │       GENERATE MOTION INFORMATION         │── 625
     └──────────────────────────────────────────┘
                           │
                           ▼
     ┌──────────────────────────────────────────┐
     │           GENERATE EVENT                  │── 630
     └──────────────────────────────────────────┘
                           │
                           ▼
                    ┌─────────────┐
                    │     END     │
                    └─────────────┘
```

# FIG. 7

# FIG. 8

# FIG. 9

```
          ( START )
              │
              ▼
┌──────────────────────────────────┐
│       OBTAIN IMAGE FRAME          │─── 910
└──────────────────────────────────┘
              │
              ▼
┌──────────────────────────────────┐
│  CALCULATE SIZE OF MOTION OF OBJECT, │─── 915
│  AND DETECT LOCATION IN IMAGE FRAME  │
└──────────────────────────────────┘
              │
              ▼
┌──────────────────────────────────┐
│      DETERMINE WHICH REGION       │─── 920
│      THE OBJECT BELONGS TO        │
└──────────────────────────────────┘
              │
              ▼
┌──────────────────────────────────┐
│        PROVIDE THRESHOLD          │─── 925
│    CORRESPONDING TO REGION        │
└──────────────────────────────────┘
              │
              ▼
┌──────────────────────────────────┐
│       COMPARE THE PROVIDED        │─── 930
│    THRESHOLD WITH MOTION SIZE     │
└──────────────────────────────────┘
              │
              ▼
┌──────────────────────────────────┐
│     GENERATE MOTION INFORMATION   │─── 935
└──────────────────────────────────┘
              │
              ▼
┌──────────────────────────────────┐
│          GENERATE EVENT           │─── 940
└──────────────────────────────────┘
              │
              ▼
          ( END )
```

# FIG. 10

1020     1030     1040

1025     1035     1045

1050

# FIG. 11

1150

1120

1110